# EUROPÄISCHE PATENTSCHRIFT

(11) **EP 3 357 104 B1**
(45) Veröffentlichungstag und Bekanntmachung des Hinweises auf die Patenterteilung: **03.07.2019**
(21) Anmeldenummer: 15771966.7
(22) Anmeldetag: 01.10.2015
(51) Int. Cl.: H01M 2/10, E05F 17/00, E05F 15/72, E05F 1/00

(54) **SICHERHEITSSCHRANK**
SAFETY CABINET
COFFRE DE SÉCURITÉ

(43) Veröffentlichungstag der Anmeldung: 08.08.2018
(73) Patentinhaber: Düperthal Sicherheitstechnik GmbH & Co.KG, 63791 Karlstein (DE)
(72) Erfinder: BACKHAUS, Frank, 31051 Herford (DE)
(74) Vertreter: Andrejewski - Honke Patent- und Rechtsanwälte Partnerschaft mbB
(86) Internationale Anmeldenummer: PCT/EP2015/072733
(87) Internationale Veröffentlichungsnummer: WO 2017/054879

(56) Entgegenhaltungen:
- CN-A- 104 681 754
- DE-A1- 3 331 331
- DE-B3- 10 316 656
- DE-U1-202009 002 534
- US-A- 4 265 051

## Beschreibung

Die Erfindung betrifft einen Sicherheitsschrank, insbesondere Batterieschrank zur Aufnahme und Bevorratung von Batterien, vorzugsweise von Hochleistungsbatterien wie Lithium-Ionen-Batterien, mit einem Schrankkorpus, ferner mit wenigstens einer an den Schrankkorpus drehbar angelenkten Drehflügeltür, weiter mit zumindest einer Öffnung im Schrankkorpus beispielsweise zur Be-/Entlüftung des Schrankinnenraumes, und mit einer Sicherung, welche ein der Öffnung zugeordnetes Verschlusselement wenigstens im Brandfall in seine Schließstellung überführt.

Sicherheitsschränke und andere Brandschutzschränke dienen typischerweise zur Aufnahme von Gefahrstoffen wie flüssigen und brennbaren Chemikalien. Es können aber auch beispielsweise Gasflaschen oder feste Gefahrstoffe im Innern bevorratet werden. Um die Gefahrstoffe vor etwaigen äußeren Brandherden zu schützen, verfügen die Sicherheitsschränke bzw. Brandschutzschränke über eine vorgegebene Feuerwiderstandsfähigkeit, die zu unterschiedlichen Feuerwiderstandsdauern korrespondiert. Tatsächlich werden die fraglichen Brandschutzschränke üblicherweise entsprechend der Vorschrift DIN EN 14470 klassifiziert. Insgesamt werden hierbei vier Stufen an Feuerwiderstandsdauer von 15 Minuten, 30 Minuten, 60 Minuten und schließlich 90 Minuten unterschieden, wie dies beispielhaft im Gebrauchsmuster DE 20 2014 101 935 U1 der Anmelderin beschrieben wird.

Ein Sicherheitsschrank des eingangs beschriebenen Aufbaus wird hinsichtlich der grundsätzlichen Auslegung und Funktion in dem Gebrauchsmuster DE 82 10 699 U1 der Anmelderin beschrieben. Der dortige Schrankkorpus ist mit einem Zuluftstutzen ausgerüstet, in welchem eine selbstschließende, mittels einer Schmelzsicherung zwangsweise in Offenstellung gehaltene und im Wesentlichen querschnittsgleiche Feuerschutzklappe angeordnet ist. Bei der Schmelzsicherung kann es sich um ein Schmelzlot oder einen Schmelzfaden handeln. Wird eine bestimmte Temperatur im Brandfalle im Zuluftstutzen erreicht, schmilzt die Schmelzsicherung, so dass die Feuerschutzklappe in Folge Schwerkrafteinfluss in ihre vertikale Schließstellung schwenkt. Da die Feuerschutzklappe dem Querschnitt des Zuluftstutzens entspricht, ist eine einwandfreie Absperrung des besagten Stutzens gewährleistet.

Durch die nächstkommende DE 20 2009 002 534 U1 ist ebenfalls ein Sicherheitsschrank bekannt geworden. Der Sicherheitsschrank verfügt über eine Öffnung im Schrankkorpus beispielsweise zur Be-/Entlüftung des Schrankinnenraumes. Außerdem ist eine Sicherung in Gestalt einer Federeinheit realisiert. Die Federeinheit verfügt im Wesentlichen über ein in gespanntem Zustand längserstreckte Rollfeder und einen Mitnehmer.

Im Rahmen der DE 103 16 656 B3 wird ein Sicherheitsschrank beschrieben, welcher über eine Halteeinrichtung verfügt. Die Halteeinrichtung weist ein Halteelement auf, mit dessen Hilfe ein Ende einer Rollbandfeder im normalen Betriebszustand fixiert wird. Dabei verfügt jede der an diese Stelle realisierten Falttüren über ein entsprechendes Halteelement. Ähnlich geht die US 4 265 051 vor.

Bei einem ebenfalls gattungsgemäßen Sicherheitsschrank neuerer Bauart der Anmelderin entsprechend der EP 2 677 104 A2 sind zwei gemeinsam an ein in einer Führung verschiebbares Verbindungselement angeschlossene Drehflügeltüren realisiert. Außerdem ist eine Federeinheit vorgesehen, welche beide Drehflügeltüren als Verschlusselemente zumindest im Schließbetrieb in Richtung ihrer Schließstellung beaufschlagt. Der Schließbetrieb korrespondiert zum Brandfall und stellt sicher, dass die beiden Drehflügeltüren zuverlässig und automatisch geschlossen werden. Dagegen ist im Normalbetrieb ein manuelles und/oder motorisches - nicht automatisches - Öffnen und Schließen vorgesehen.

Der Schließbetrieb korrespondiert dazu, dass die Federeinheit zum Einsatz kommt, weil eine die Federeinheit zuvor fixierende Brandschutzsicherung bzw. Schmelzsicherung als generelle Sicherung thermisch ausgelöst wird. Dadurch kann die Federeinheit die Drehflügeltüren in Richtung ihrer Schließstellung mit Kraft beaufschlagen. Das hat sich bewährt.

Aus der Praxis bekannte Sicherheitsschränke werden zunehmend und ohne Modifikation auch zur Bevorratung von Batterien eingesetzt. Hier gibt es im Stand der Technik entsprechend der DE 101 14 960 C1 bereits Vorbilder dahingehend, die bei einem solchen Batterieschrank eine Wärmetransfereinrichtung zur Temperaturregelung des Gehäuseinnenraums auf ein vorgegebenes Temperaturniveau vorsehen. Mit Hilfe der betreffenden Wärmetransfersicherung soll der Gehäuseinnenraum auch bei großen Temperaturschwankungen außerhalb des Gehäuses in einem vorgegebenen Temperaturbereich gehalten werden. Dazu kann die Wärmetransfereinrichtung mit einem an der Gehäuseaußenseite vorgesehenen Wärmetauscher wärmeleitend verbunden werden, was konstruktiv aufwendig ist.

Die Handhabung von Batterien und insbesondere Hochleistungsbatterien wie Lithium-Ionen-Batterien ist nicht unproblematisch. Das lässt sich im Kern darauf zurückführen, dass solche Batterien beim Ladevorgang und selbst bei der Lagerung einen Kurzschluss in einer oder mehreren Batteriezellen aufweisen können. Tatsächlich werden typischerweise mehrere Lithium-Ionen-Batteriezellen zu einem Batteriemodul verschaltet.

Das sogenannte Überladeverhalten solcher Lithium-Ionen-Batteriezellen bzw. der fertig verschalteten Lithium-Ionen-Batterie oder auch des Batteriemoduls hat sich in der Praxis als kritisch erwiesen. Denn ein Aufladevorgang über die maximal zulässige Spannung hinaus kann eine Schädigung der Batteriezelle bis zu einem sogenannten "Durchgehen" der Batteriezellen hervorrufen. Als Folge hiervon kann eine Explosion der Batteriezelle eintreten. Durch diesen Kurzschluss kann es je nach Spannungsniveau außerdem zu einem Lichtbogen und folglich Brand kommen. Das ist selbst bei aufgeladenen Lithium-Ionen-Batterien im Lagerungszustand und ohne zusätzlichen Ladevorgang möglich.

Aus diesem Grund hat man im Stand der Technik beispielsweise nach der DE 10 2013 204 341 A1 bereits Sicherheitseinrichtungen unter Rückgriff auf eine Schmelzsicherung beschrieben. Dadurch soll ein Überladungsschutz zur Verfügung gestellt werden. Hieraus resultierende Probleme bei der Lagerung solcher Batterien in Sicherheitsschränken sind bisher in der Praxis nicht beachtet worden. Folgerichtig fehlen auch bis jetzt überzeugende Lösungen. Hier setzt die Erfindung ein.

Der Erfindung liegt das technische Problem zugrunde, einen Sicherheitsschrank der eingangs beschriebenen Ausgestaltung so weiter zu entwickeln, dass spezifische und mit der Lagerung von Hochleistungsbatterien wie Lithium-Ionen-Batterien verbundene Probleme zuverlässig beherrscht werden.

Zur Lösung dieser Problemstellung ist ein gattungsgemäßer Sicherheitsschrank im Rahmen der Erfindung dadurch gekennzeichnet, dass die Sicherung zumindest zweiteilig mit einer ersten Sicherung und einer zweiten Sicherung ausgebildet ist, wobei die beiden Sicherungen in Reihe miteinander gekoppelt sind und das Verschlusselement wahlweise wenigstens im Brandfall beaufschlagen.

Die Erfindung greift also bewusst nicht (nur) auf eine einzige Sicherung zurück, die üblicherweise als Schmelzsicherung ausgelegt ist. Vielmehr sind erfindungsgemäß wenigstens zwei Sicherungen realisiert, die vorteilhaft jeweils als Schmelzsicherung ausgelegt werden. Die beiden Sicherungen sind in Reihe miteinander gekoppelt, und zwar hierdurch im Sinne einer ODER-Verknüpfung. Dadurch sind die beiden Sicherungen in der Lage, wahlweise das Verschlusselement wenigstens im Brandfall beaufschlagen zu können. Da das Verschlusselement der Öffnung zugeordnet ist und dieser größenmäßig entspricht, wird die besagte Öffnung im Brandfall zuverlässig mit Hilfe des Verschlusselementes abgesperrt.

Das heißt, im Brandfall reicht es im Allgemeinen aus, wenn eine der beiden Sicherungen bzw. Schmelzsicherungen auslöst. Als Folge hiervon wird das Verschlusselement in seine Schließstellung überführt. Die Öffnung ist geschlossen. Die gleiche Funktionsweise wird für den Fall beobachtet, dass beide Sicherungen bzw. Schmelzsicherungen im Brandfall ausgelöst werden. Folgerichtig beaufschlagen die beiden Sicherungen das Verschlusselement wahlweise, und zwar im Sinne der bereits angesprochenen ODER-Verknüpfung.

Durch diese Auslegung können die beiden Sicherungen örtlich voneinander getrennt und beabstandet im Innern des Sicherheitsschrankes, das heißt im Schrankinnenraum, verteilt angebracht werden. Außerdem ist es möglich, eine Sicherung im Schrankinnenraum und eine Sicherung im Schrankaußenraum bzw. an der Außenoberfläche des Schrankkorpus vorzusehen. In diesen sämtlichen Fällen wird gewährleistet, dass selbst ein nur lokal auftretender Brandherd zuverlässig erfasst werden kann. Denn durch die verteilte Anordnung der Sicherungen können unterschiedliche Bereiche beispielsweise des Schrankinnenraumes oder auch des Schrankaußenraumes bzw. an der Außenoberfläche des Schrankkorpus abgedeckt und hinsichtlich dort entstehender und zunächst lokaler Brandherde erfasst werden. Dadurch eröffnet die Erfindung die Möglichkeit, viel früher auf solche lokalen Brandherde reagieren zu können, als dies im Stand der Technik mit der lediglich einen einzigen Sicherung der Fall ist und bisher möglich war.

Hierbei geht die Erfindung von der Erkenntnis aus, dass gerade bei der Bevorratung von Hochleistungsbatterien und insbesondere Lithium-Ionen-Batterien in dem fraglichen erfindungsgemäßen Sicherheitsschrank zunächst lokale Brandherde entstehen können, beispielsweise als Folge eines Kurzschlusses in nur einer Batterie. Durch die verteilte Anordnung der wenigstens zwei Sicherungen im Innern und an der äußeren Peripherie des erfindungsgemäßen Sicherheitsschrankes werden nun solche lokalen Brandherde unmittelbar erfasst. Tatsächlich besteht beispielsweise die Möglichkeit, die erste Sicherung bodennah und die zweite Sicherung dachnah im Schrankinnenraum zu platzieren.

Im Stand der Technik sind solche Sicherungen - wenn überhaupt - im Dachbereich des Schrankkorpus vorgesehen. Kommt es bei einem solchen bekannten Sicherheitsschrank nun beispielsweise zu einem Brand einer Lithium-Ionen-Batterie in Bodennähe, so wird die fragliche Sicherung bzw. Schmelzsicherung zunächst nicht ausgelöst. Vielmehr ist es hierfür erforderlich, dass der Brand praktisch von der einen Batterie auf eine Vielzahl weiterer Batterien übergreift. Erst dann ist damit zu rechnen, dass auch im Dachbereich des Schrankkorpus die notwendigen Temperaturen für die Auslösung der dort im Stand der Technik angeordneten Sicherung bzw. Schmelzsicherung sorgen.

Demgegenüber wird erfindungsgemäß durch die verteilte Anordnung der beiden Sicherungen, beispielsweise derart, dass die erste Sicherung im Bodenbereich des Schrankkorpus im Schrankinnenraum und die zweite Sicherung im Dachbereich des Schrankkorpus im Schrankinnenraum platziert werden, der fragliche lokale bodenseitige Brandherd erkannt und führt unmittelbar dazu, dass das Verschlusselement in seine Schließstellung überführt wird. Dadurch wird zuverlässig eine ansonsten nicht beherrschbare Vergrößerung des Brandherdes vermieden, weil das in Schließstellung befindliche Verschlusselement den Schrankinnenraum nach außen hin verschließt, so dass praktisch kein Luftsauerstoff in den Schrankinnenraum mehr eintreten kann. Hieraus resultiert ein deutlicher Sicherheitsgewinn, der bisher nicht für möglich gehalten wurde.

Im Allgemeinen halten die beiden Sicherungen im Normalbetrieb das Verschlusselement zwangsweise in Offenstellung. Bei dem Verschlusselement kann es sich um eine Schutzklappe handeln, welche die Öffnung im Schranckorpus zur Be-/Entlüftung des Schrankinnenraumes im Brandfall verschließt. Liegt der Brandfall nicht vor, also im Normalbetrieb, muss die fragliche Öffnung von der Schutzklappe frei sein, damit über die Öffnung der Schrankinnenraum be- und entlüftet werden kann.

Im Regelfall sind an dieser Stelle zwei Öffnungen im Schrankkorpus realisiert, nämlich eine Zuluftöffnung und eine Abluftöffnung. Dabei hat es sich besonders bewährt, wenn die Zuluftöffnung und die Abluftöffnung mit einer gemeinsamen Schutzklappe ausgerüstet werden. Bei der gemeinsamen Schutzklappe handelt es sich typischerweise um einen linear bewegbaren Ventilschieber.

Im Normalbetrieb wird der Ventilschieber in seiner Offenstellung gehalten. Dann sind sowohl die Zuluftöffnung als auch die Abluftöffnung von dem Ventilschieber frei, so dass der Schrankinnenraum be- und entlüftet werden kann. Im Brandfall sorgt jedoch die erste Sicherung oder die zweite Sicherung oder sorgen beide Sicherungen dafür, dass der fragliche Ventilschieber seine Offenstellung verlässt und in die Schließstellung überführt wird. Dann sind sowohl die Zuluftöffnung als auch die Abluftöffnung verschlossen, so dass der Schrankinnenraum hermetisch oder nahezu hermetisch verschlossen wird und insbesondere kein Luftsauerstoff mehr eindringen kann. Ein im Innern des Schrankinnenraumes vorhandener lokaler Brandherd wird hierdurch gleichsam "erstickt".

Alternativ oder zusätzlich kann es sich bei dem Verschlusselement aber auch um die wenigstens eine Drehflügeltür handeln. Dann fällt die zu verschließende Öffnung mit einer Türöffnung zusammen. In diesem Fall sorgt die erste Sicherung oder die zweite Sicherung oder sorgen beide Sicherungen im Brandfall dafür, dass die fragliche Drehflügeltür in ihre Schließstellung überführt wird. Befindet sich die Drehflügeltür bereits in ihrer Schließstellung, so verbleibt sie selbstverständlich in dieser Position. Auch in diesem Fall stellt die Erfindung sicher, dass der Schrankinnenraum im Brandfall hermetisch oder nahezu hermetisch gegenüber der Umgebung verschlossen wird, so dass Luftsauerstoff nicht oder nur gering eindringen kann und der den Brandfall auslösende lokale Brandherd wie beschrieben "erstickt" wird.

Neben der bereits angesprochenen Möglichkeit, die erste Sicherung und die zweite Sicherung verteilt im Schrankinnenraum anzuordnen, beispielsweise dachseitig und bodenseitig des Schrankkorpus, besteht darüber hinaus im Rahmen der Erfindung die Option, dass die beiden Sicherungen als einerseits Außensicherung und andererseits Innensicherung ausgelegt sind. Auch in diesem Fall sind die Außensicherung und die Innensicherung in Reihe miteinander gekoppelt und beaufschlagen im Brandfall gemeinsam und wahlweise das Verschlusselement.

Die Außensicherung ist im Regelfall an eine Außenoberfläche des Schranckorpus angeschlossen. Tatsächlich wird man die Außensicherung meistens dachaußenseitig vorsehen, weil bei einem Brand außerhalb des Sicherheitsschrankes die höchsten Temperaturen erfahrungsgemäß im Dachbereich und nahe einer Raumdecke beobachtet werden, so dass die Außensicherung zuverlässig für die Einnahme der Schließstellung des Verschlusselementes sorgen kann. Dadurch wird der Schrankinnenraum erneut hermetisch oder nahezu hermetisch gegenüber der äußeren Umgebung verschlossen, so dass im Innern des Schrankkorpus bevorratete Gefahrstoffe wie beispielsweise Chemikalien oder auch die Batterien nicht zusätzlich noch zu brennen anfangen, sondern vielmehr vor dem äußeren Brandherd geschützt sind.

Demgegenüber wird man die Innensicherung typischerweise an eine Innenoberfläche des Schrankkorpus anschließen. Das kann ebenfalls dachinnenseitig geschehen. Es ist aber auch möglich, mit zwei Innensicherungen zu arbeiten, beispielsweise einer dachinnenseitigen Innensicherung und zusätzlich einer bodeninnenseitigen Innensicherung. Auch in diesem Fall sind die dann drei Sicherungen in Reihe miteinander gekoppelt und beaufschlagen im Brandfall das Verschlusselement wahlweise im Sinne einer ODER-Verknüpfung. Es reicht also für die Beaufschlagung des Verschlusselementes im Brandfall und seine Überführung in die Schließstellung aus, wenn die Außensicherung oder die dachinnenseitige Innensicherung oder die bodeninnenseitige Innensicherung zur Beaufschlagung des Verschlusselementes in die Schließstellung ausgelöst werden.

Jedenfalls wird durch die eine oder mehrere Innensicherungen ein etwaiger Brandherd im Schrankinnenraum zuverlässig erfasst und mündet wunschgemäß darin, dass die jeweils ausgelöste Innensicherung das Verschlusselement im Brandfall in seine Schließstellung überführt. Dadurch wird erneut der Schrankinnenraum hermetisch oder nahezu hermetisch verschlossen, so dass in diesem Fall der im Innern befindliche Brandherd "erstickt", zumindest nicht auf Bereiche außerhalb des Sicherheitsschrankes übergreift. - Kommt es zu einem Brand außerhalb des Sicherheitsschrankes, so spricht die Außensicherung an und sorgt für den Schrankverschluss.

Nach vorteilhafter Ausgestaltung werden die erste Sicherung und die zweite Sicherung meistens von einer gemeinsamen Zugfeder beaufschlagt. Diese Zugfeder sorgt im Regelfall dafür, dass das Verschlusselement in seiner Offenstellung gehalten wird. Sofern die erste Sicherung oder die zweite Sicherung oder beide Sicherungen im Brandfall ausgelöst werden, geben sie das Verschlusselement frei. Als Folge hiervon sorgt die Zugfeder dafür, dass das Verschlusselement in seine Schließstellung zwangsweise überführt wird. Dazu sind die beiden Sicherungen typischerweise als Schmelzlot oder Schmelzfaden ausgebildet.

Erreicht die Temperatur im Bereich der betreffenden Sicherung einen durch die Materialwahl und Auslegung des Schmelzlotes bzw. Schmelzfadens vorgegebenen Wert, beispielsweise eine Temperatur von 50°C und insbesondere 70°C oder noch mehr, bricht der betreffende Schmelzfaden bzw. das Schmelzlot, so dass dann das Verschlusselement nicht (mehr) zwangsweise in Offenstellung gehalten wird. Vielmehr sorgt in diesem Fall die gemeinsame Zugfeder dafür, dass das Verschlusselement durch Federkraft in die Schließstellung überführt wird.

In diesem Zusammenhang hat es sich bewährt, wenn die beiden Sicherungen in gemeinsamer Richtung von der Zugfeder beaufschlagt werden. Das heißt, die von der Zugfeder aufgebaute Schließkraft für das Verschlusselement wirkt in gleicher Richtung sowohl auf die erste Sicherung als auch die zweite Sicherung. Dadurch ist gewährleistet, dass die beiden Sicherungen mit gleicher Zugkraft von der Zugfeder beaufschlagt werden und folglich auch bei vergleichbaren Temperaturen auslösen, wenn die beiden Sicherungen gleich aufgebaut sind.

Das ist regelmäßig der Fall, wenngleich von der Erfindung prinzipiell auch Varianten umfasst werden, bei denen mit unterschiedlich aufgebauten Sicherungen bzw. Schmelzsicherungen gearbeitet wird. Im Regelfall kommen jedoch als erste Sicherung und zweite Sicherung jeweils gleich ausgelegte Schmelzsicherungen bzw. Schmelzlote oder Schmelzfäden zum Einsatz, die bei in etwa gleicher Schmelztemperatur von wenigstens 50°C und insbesondere von 70°C und mehr brechen. Durch den Bruch der Schmelzsicherung kann die gemeinsame und das Verschlusselement beaufschlagende Zugfeder nicht (mehr) in ihrer gespannten Position gehalten werden, sondern entspannt sich und überführt hierdurch zugleich das Verschlusselement in seine Schließstellung.

Vergleichbare Vorteile ergeben sich für den Fall, dass als Sicherung bzw. Schmelzsicherung jeweils ein Thermoelement zum Einsatz kommt. Dieses Thermoelement kann das zuvor beschriebene Schmelzlot oder den Schmelzfaden ersetzen. Grundsätzlich können natürlich auch Schmelzlote, Schmelzfäden und Thermoelemente nebeneinander und parallel zueinander Verwendung finden. Bei dem angesprochenen Thermoelement mag eine mit Flüssigkeit gefüllte Glaspatrone zum Einsatz kommen. Bei einer vorgegebenen Schmelztemperatur (beispielsweise wenigstens 50°C und insbesondere 70°C und mehr) kommt es zur Verpuffung der Flüssigkeit im Innern der Glaspatrone und damit zum Brechen der Glaspatrone (auch als "backdraft" bezeichnet).

Um die beiden Sicherungen im Detail in Reihe miteinander koppeln zu können, sind die beiden Sicherungen regelmäßig über ein gemeinsames Verbindungselement miteinander und mit der Zugfeder gekoppelt. Bei dem Verbindungselement handelt es sich meistens um ein Verbindungsseil, welches einerseits flexibel ist und andererseits die nötige Festigkeit aufweist, um die Zugfeder in gespanntem Zustand halten zu können. Zugleich lässt sich ein solches Verbindungsseil besonders einfach im Schrankinnenraum verlegen. Gleiches gilt für den Fall, dass nicht nur der Schrankinnenraum, sondern auch der Schrankaußenraum bzw. die Außenoberfläche des Schrankkorpus erfasst werden soll.

Denn sofern eine Außensicherung und eine Innensicherung realisiert sind, wird das fragliche Verbindungsseil zur Kopplung der Außensicherung und der Innensicherung durch eine Öffnung im Schrankkorpus hindurchgeführt. Da das Verbindungsseil regelmäßig über einen nur geringen Durchmesser verfügt, kann die fragliche Öffnung kleingehalten werden. Tatsächlich sind an dieser Stelle Öffnungen im Millimeterbereich völlig ausreichend. Beispielsweise mag die Öffnung einen Durchmesser von 5 mm im Maximum aufweisen.

Schließlich kann insgesamt so vorgegangen werden, dass die beiden Sicherungen an einen gemeinsamen Bereich des Schrankkorpus angeschlossen werden. Bei diesem gemeinsamen Bereich des Schrankkorpus kann es sich um eine Dachhälfte des Schrankkorpus handeln. In diesem Fall mag die Innensicherung dachinnenseitig an die fragliche Dachhälfte des Schrankkorpus angeschlossen sein, wohingegen die Außensicherung dachaußenseitig mit der betreffenden Dachhälfte verbunden ist. Dadurch wird ein kompakter Aufbau zur Verfügung gestellt und kann das die beiden Sicherungen verbindende Verbindungsseil unter Berücksichtigung nur weniger Umlenkungen im und am Sicherheitsschrank geführt werden.

Im Ergebnis wird ein Sicherheitsschrank zur Verfügung gestellt, der sowohl bei einer äußeren Wärmeeinwirkung als auch bei einem inneren Brand jeweils hermetisch oder nahezu hermetisch und zwangsweise verschlossen wird. Dadurch werden im erstgenannten Fall im Sicherheitsschrank bevorratete Gefahrstoffe oder auch Batterien vor dem äußeren Brandherd geschützt. Im zweitgenannten Fall wird ein Ausbreiten des im Innern entstehenden Brandherdes auf die Peripherie des Sicherheitsschrankes verhindert. Durch den Rückgriff auf wenigstens zwei oder mehr Sicherungen bzw. Schmelzsicherungen können hierbei auch nur lokal entstehende Brandherde unmittelbar erfasst werden, so dass im Vergleich zum Stand der Technik ein deutlicher Sicherheitsgewinn beobachtet wird.
Das alles gelingt bei einem zugleich kompakten und kostengünstigen sowie frappierend einfachen Aufbau. Schließlich sollte in diesem Zusammenhang betont werden, dass als mit Hilfe der beiden Sicherungen in Schließstellung überführtes Verschlusselement sowohl eine Drehflügeltür oder mehrere Drehflügeltüren eines Sicherheitsschrankes genauso umfasst werden wie eine oder mehrere Schutzklappen zum Verschluss einer Zuluftöffnung bzw. Abluftöffnung. Insofern wird eine universelle und generell anwendbare Lehre vermittelt. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: Einen erfindungsgemäßen Sicherheitsschrank nach der Erfindung schematisch, teilweise im Schnitt und mit Blick von oben,
- Fig. 2: den Sicherheitsschrank in einer ersten Variante in einer Ansicht von unten auf das Dach des Schrankkorpus,
- Fig. 3: das Dach des Schrankkorpus nach Fig. 2 in einer Ansicht von außen auf das Dach,
- Fig. 4: den erfindungsgemäßen Sicherheitsschrank in einer weiteren Variante im Schnitt in Normalstellung mit einer geöffneten Drehflügeltür, und
- Fig. 5: den Sicherheitsschrank nach der Fig. 4 in Schließstellung der Sicherung.

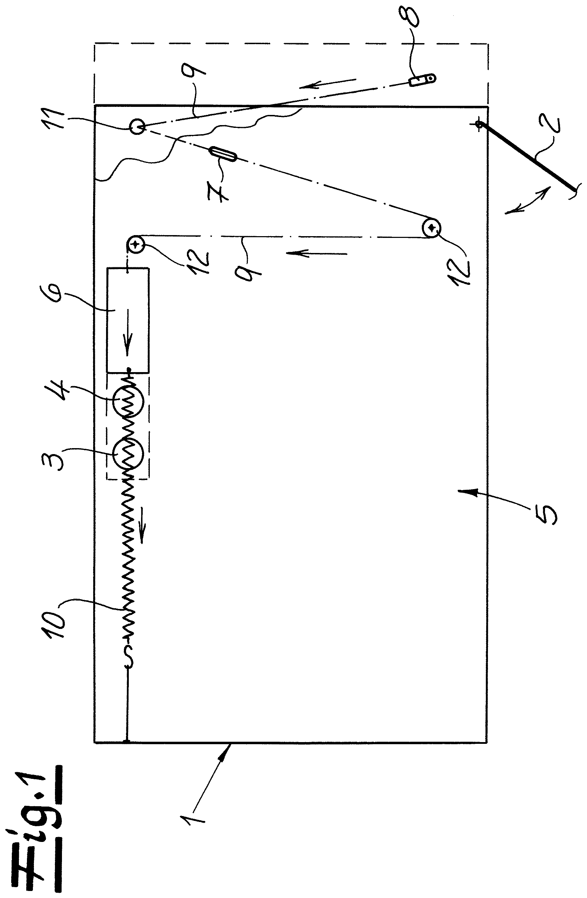

In der Fig. 1 ist in einer Übersicht und grob schematisch ein Sicherheitsschrank dargestellt, der vorliegend als Batterieschrank zur Aufnahme und Bevorratung von Hochleistungsbatterien wie Lithium-Ionen-Batterien geeignet und ausgelegt ist. Grundsätzlich kann der Sicherheitsschrank aber auch andere Gefahrstoffe wie beispielsweise flüssige Chemikalien, feste Chemikalien, Gasflaschen etc. aufnehmen. Der Sicherheitsschrank verfügt in seinem grundsätzlichen Aufbau über einen Schrankkorpus 1. An den Schrankkorpus 1 ist im Rahmen der Darstellung nach der Fig. 1 eine Drehflügeltür 2 gelenkig angeschlossen. Grundsätzlich kann auch mit zwei gelenkig an den Schrankkorpus 1 angeschlossenen Drehflügeltüren 2 gearbeitet werden, wie dies in den nachfolgenden Figuren dargestellt ist.

Der Schrankkorpus 1 weist darüber hinaus wenigstens eine Öffnung 3, 4 zur Be-/Entlüftung eines Schrankinnenraumes 5 auf. Tatsächlich erkennt man in der Fig. 1 eine Zuluftöffnung 4 und eine Abluftöffnung 3. Der fraglichen zumindest einen Öffnung 3, 4 im Schrankkorpus 1 ist ein Verschlusselement 6 zugeordnet. Bei dem Verschlusselement 6 handelt es sich im dargestellten Beispielfall um eine Schutzklappe bzw. einen linear bewegbaren Ventilschieber 6.

In der Fig. 1 ist durchgezogen die Normalstellung des Verschlusselementes bzw. Ventilschiebers 6 und folglich des Sicherheitsschrankes dargestellt. Demgegenüber korrespondiert die gestrichelte Position des Verschlusselementes bzw. Ventilschiebers 6 zu seiner Schließstellung. Das Verschlusselement bzw. der Ventilschieber 6 wird wenigstens im Brandfall in die gestrichelt dargestellte Schließstellung überführt. In dieser Schließstellung sorgt das Verschlusselement 6 dafür, dass die Öffnung 3, 4 im Schrankkorpus 1 bzw. die Zuluftöffnung 4 und die Abluftöffnung 3 vorliegend gemeinsam verschlossen werden. Dadurch kann ein beispielsweise im Innern des Schrankkorpus vorhandener Brandherd nicht auf die äußere Schrankumgebung übergreifen. Außerdem ist sichergestellt, dass in diesem Fall der fragliche Brandherd im Schrankinnenraum nicht beispielsweise über die Zuluftöffnung 4 weiter mit Luftsauerstoff beaufschlagt wird, vielmehr der Schrankkorpus 1 hermetisch oder nahezu hermetisch verschlossen wird. Dadurch kann der fragliche Brandherd im Innern des Schrankkorpus 1 "erstickt" werden.

Beobachtet man dagegen einen Brandherd außerhalb des dargestellten Sicherheitsschrankes, so korrespondiert die Schließstellung des Verschlusselementes 6 im Brandfall dazu, dass im Innern des Sicherheitsschrankes bevorratete Gefahrstoffe von den Flammen außerhalb des Sicherheitsschrankes nicht erfasst werden. Damit das Verschlusselement 6 von seiner durchgezogen dargestellten Normalstellung in die gestrichelt wiedergegebene Schließstellung überführt wird und auch überführt werden kann, ist eine Sicherung 7, 8 vorgesehen. Tatsächlich überführt die Sicherung 7, 8 das fragliche Verschlusselement 6 wenigstens im Brandfall in seine Schließstellung.

Im Ausführungsbeispiel ist die Sicherung 7, 8 wenigstens zweiteilig mit einer ersten Sicherung 7 und einer zweiten Sicherung 8 ausgebildet. Bei den beiden Sicherungen 7, 8 handelt es sich jeweils um Schmelzsicherungen. Außerdem sind die beiden Sicherungen 7, 8 erfindungsgemäß in Reihe miteinander gekoppelt, wie dies die Fig. 1 schematisch andeutet.

Auf diese Weise können die beiden Sicherungen 7, 8 das Verschlusselement 6 wahlweise im Sinne einer ODER-Verknüpfung in dem fraglichen Brandfall und wenigstens dann beaufschlagen. Selbstverständlich wird das Verschlusselement 6 grundsätzlich auch durch beide Sicherungen 7, 8 beaufschlagt.

Um dies im Detail zu erreichen, halten die beiden Sicherungen 7, 8 das Verschlusselement im durchgezogen gezeichneten Normalbetrieb in seiner Offenstellung. Dazu sind die beiden Sicherungen 7, 8 jeweils an den Schrankkorpus 1 angeschlossen. Außerdem sind die beiden Sicherungen 7, 8 über ein gemeinsames Verbindungselement 9 miteinander gekoppelt. Bei dem Verbindungselement 9 handelt es sich im Ausführungsbeispiel um ein Verbindungsseil 9.

Darüber hinaus erkennt man anhand der schematischen Darstellung in der Fig. 1, dass die beiden Sicherungen 7, 8 über das gemeinsame Verbindungselement bzw. Verbindungsseil 9 miteinander und mit einer Zugfeder 10 gekoppelt sind. Die Zugfeder 10 ist mit ihrem einen Ende an den Schranckorpus 1 angeschlossen und beaufschlagt mit ihrem anderen Ende das Verschlusselement 6. Tatsächlich ist die Auslegung so getroffen, dass das Verschlusselement 6 einerseits an das Verbindungselement bzw. an das Verbindungsseil 9 und folglich die beiden Sicherungen 7, 8 und andererseits an die Zugfeder 10 angeschlossen ist. Dabei wird das Verschlusselement 6 zwangsweise in der Offenstellung gehalten und die Zugfeder 10 gleichzeitig auf Zug gehalten.

Sobald nun die jeweils als Schmelzsicherung ausgelegten Sicherungen 7, 8 im Brandfall brechen, führt dies dazu, dass das Verschlusselement 6 gegen die Kraft der Zugfeder 10 nicht (mehr) in Offenstellung gehalten werden kann. Vielmehr sorgt im Brandfall die Zugfeder 10 dafür, dass das Verschlusselement 6 von seiner durchgezogen dargestellten Offenstellung in die gestrichelt gezeichnete Schließstellung überführt wird, und zwar automatisch, sobald eine der beiden Sicherungen 7, 8 oder beide ausgelöst werden und folglich brechen.

Tatsächlich handelt es sich bei der jeweiligen Sicherung 7, 8 - wie bereits dargelegt - um eine Schmelzsicherung. Im Ausführungsbeispiel können an dieser Stelle verschiedene Varianten umgesetzt werden. Beispielsweise mag die Sicherung 7 als Schmelzlot oder Schmelzfaden ausgelegt sein. Gleiches gilt für die Sicherung 8. Außerdem ist die Auslegung so getroffen, dass beide Sicherungen 7, 8 bei einer vergleichbaren Schmelztemperatur auslösen bzw. brechen. Im Regelfall wird man an dieser Stelle mit Schmelztemperaturen von ca. 70°C arbeiten. Beim Erreichen dieser Schmelztemperatur von 70°C schmilzt das Schmelzlot bzw. bricht der Schmelzfaden, so dass dann die fragliche Sicherung 7, 8 das Verschlusselement 6 gegen die Kraft der Zugfeder 10 nicht mehr in Offenstellung halten kann und das Verschlusselement 6 durch gleichzeitige Entspannung der Zugfeder 10 in seine Schließstellung entsprechend der gestrichelten Darstellung überführt wird.

Im Rahmen der Fig. 1 sind unterschiedliche Ausprägungen des Schrankkorpus 1 mit der daran angelenkten Drehflügeltür 2 angedeutet. Hieraus resultieren verschiedene Anbringungsorte für die beiden Sicherungen 7, 8. So ist es im Rahmen der durchgezogenen dargestellten Variante möglich, die erste Sicherung 7 als Innensicherung 7 auszulegen, welche im Schrankinnenraum angeordnet und hier festgelegt wird. Demgegenüber ist die zweite Sicherung 8 als Außensicherung ausgelegt und außerhalb des Schrankkorpus 1 vorgesehen. Beispielsweise können beide Sicherungen 7, 8 einerseits dachinnenseitig und andererseits dachaußenseitig an den Schrankkorpus 1 angeschlossen werden.

Darüber hinaus deutet die Fig. 1 an und ist es im Rahmen der Erfindung möglich, beide Sicherungen 7, 8 als gleichsam Innensicherungen 7, 8 auszugestalten und gemeinsam im Schrankinnenraum zu platzieren. Dann wird man beispielsweise so vorgehen, dass die erste Sicherung 7 bodenseitig platziert wird, während die zweite Sicherung 8 eine dachseitige Anordnung erfährt.

Hierzu korrespondiert die in der Fig. 1 gestrichelt dargestellte Variante. Neben diesen prinzipiellen Möglichkeiten besteht darüber hinaus die Option, mit beispielsweise zwei Innensicherungen 7 und einer Außensicherung 8 zu arbeiten, wie dies in der Beschreibungseinleitung bereits beschrieben ist. Diese Variante findet jedoch keinen zeichnerischen Niederschlag.

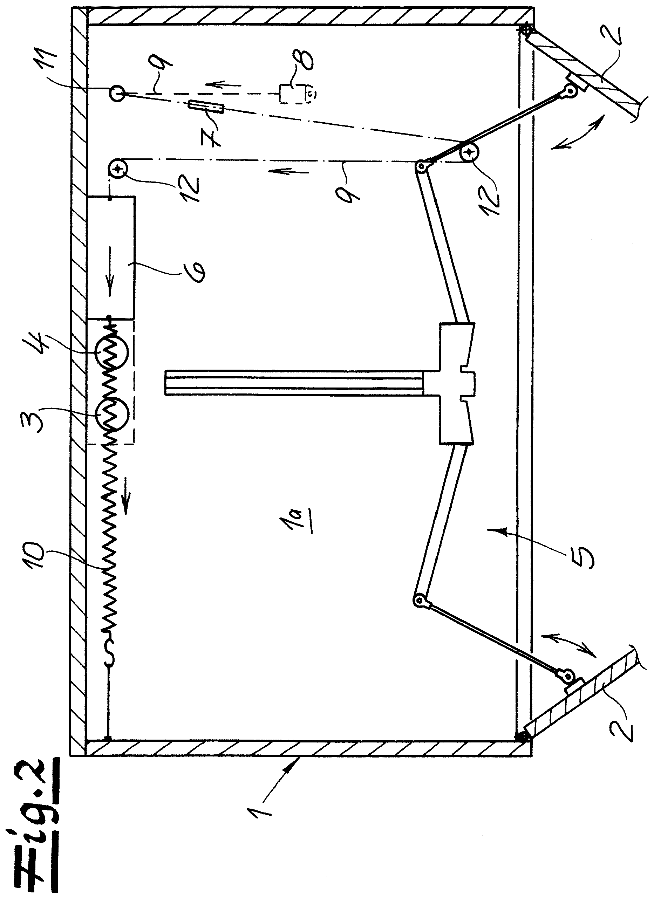

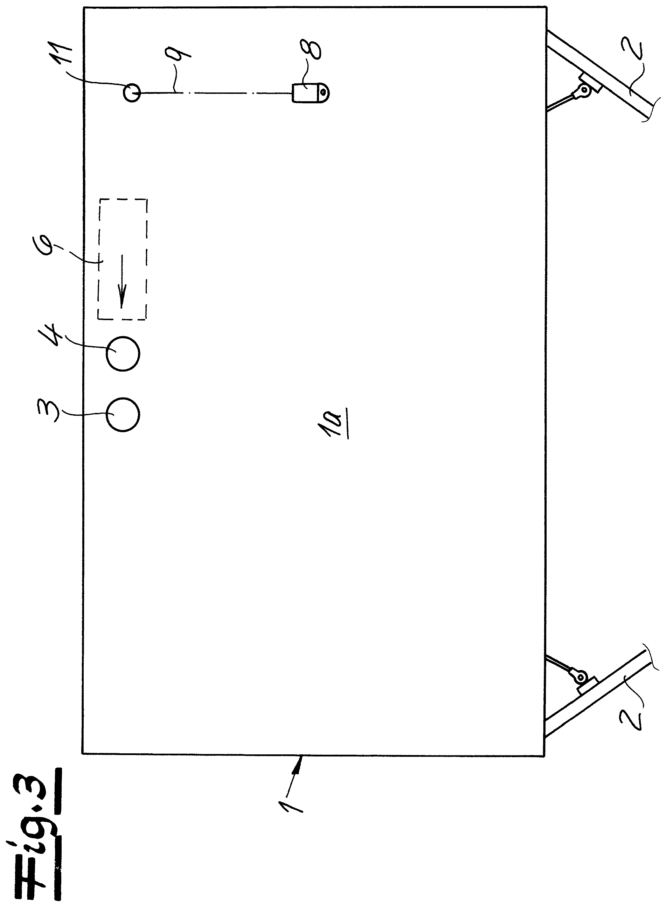

Betrachtet man nun konkret unter Berücksichtigung dieser Vorabinformationen das Ausführungsbeispiel in den Fig. 2 und 3, so erkennt man, dass in diesem Fall die erste Sicherung 7 als Innensicherung 7 dachinnenseitig an ein Dach 1a des Schrankkorpus 1 angeschlossen ist. Demgegenüber befindet sich die zweite Sicherung 8 bzw. Außensicherung 8 dachaußenseitig des fraglichen Daches 1a. Wie zuvor bereits erläutert, sind die beiden Sicherungen 7, 8 durch das gemeinsame Verbindungselement bzw. Verbindungsseil 9 miteinander verbunden und insgesamt in Reihe angeordnet. Zu diesem Zweck wird das Verbindungsseil 9 zur Kopplung der Außensicherung 8 mit der Innensicherung 7 durch eine Öffnung 11 im Dach 1a des Schrankkorpus 1 hindurchgeführt. Außerdem erkennt man, dass die beiden Sicherungen 7, 8 von der gemeinsamen Zugfeder 10 in gemeinsamer bzw. gleicher Richtung beaufschlagt werden, wie die Fig. 2 durch entsprechende Pfeile andeutet.

Auf diese Weise werden vergleichbare Zug- bzw. Kraftverhältnisse an der jeweiligen Sicherung 7, 8 zur Verfügung gestellt. Sobald also die betreffende Sicherung 7, 8 bei in etwa übereinstimmender Temperatur bricht, sorgt die Kraftbeaufschlagung durch die Zugfeder 10 in gleicher Richtung dafür, dass dieser Vorgang unmittelbar auf das Verschlusselement 6 übertragen wird und dieses von der Zugfeder 10 in seine Schließstellung überführt wird. Man erkennt schließlich noch anhand der Darstellung in den Fig. 2 und 3, dass die Sicherungen 7, 8 einerseits und die Zugfeder 10 andererseits senkrecht zueinander angeordnet sind, so dass das Verbindungselement bzw. Verbindungsseil 9 über eine Umlenkrolle 12 zu den beiden Sicherungen 7, 8 geführt werden muss. Durch diese Auslegung wird ein insgesamt kompakter Aufbau begünstigt. Selbstverständlich kann auf die fragliche Umlenkrolle 12 grundsätzlich auch verzichtet werden. Im Ausführungsbeispiel nach den Fig. 2 und 3 erkennt man schließlich, dass die beiden Sicherungen 7, 8 bzw. die Innensicherung 7 und auch die Außensicherung 8 an eine gemeinsame Dachhälfte des Schrankkorpus angeschlossen sind. Tatsächlich finden sich beide Sicherungen 7, 8 in der rechten Hälfte des Daches 1a des Schrankkorpus 1.

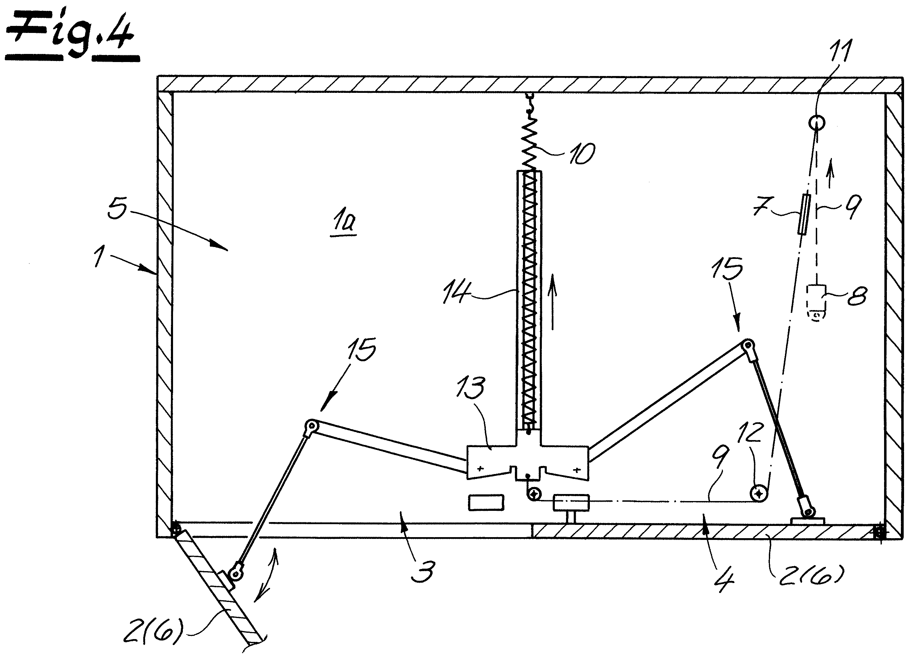

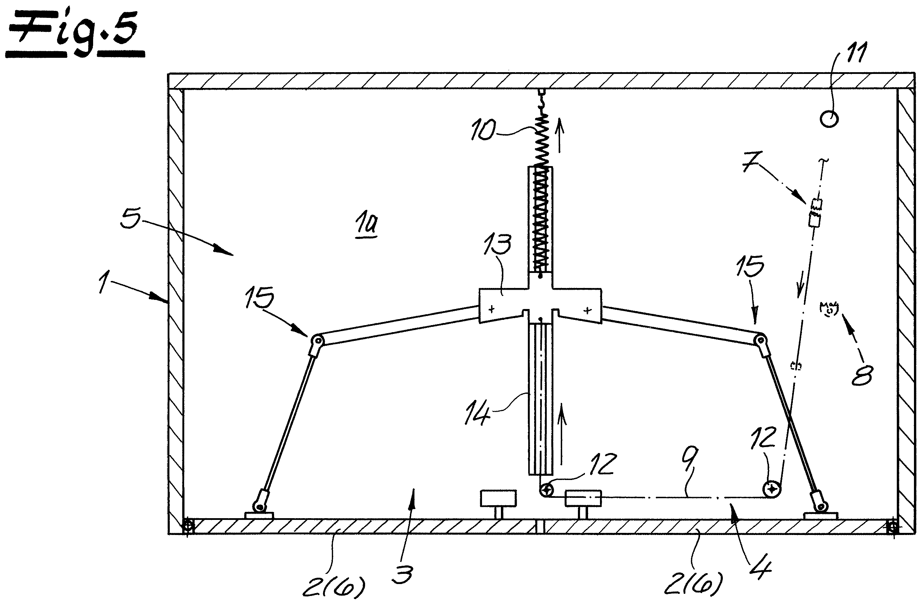

Beim weiteren zweiten Ausführungsbeispiel nach den Fig. 4 und 5 ist die Öffnung 3, 4 im Schrankkorpus 1 gleichsam als Türöffnung 3, 4 ausgelegt, welche einerseits zur linken Drehflügeltür 2 und andererseits zur rechten Drehflügeltür 2 korrespondiert. Folgerichtig handelt es sich bei dem Verschlusselement 6 im Rahmen der Variante nach den Fig. 4 und 5 um die eine bzw. die beiden Drehflügeltüren 2. Auch in diesem Fall sind die beiden Sicherungen 7, 8 realisiert. Die beiden Sicherungen 7, 8 mögen sich erneut dachseitig des Schrankkorpus 1 finden. Dabei ist wiederum die erste Sicherung 7 als Innensicherung ausgelegt, wohingegen es sich bei der zweiten Sicherung 8 um eine Außensicherung 8 handelt, welche in der Schnittdarstellung der Fig. 4 folglich lediglich gestrichelt dargestellt ist.

Die beiden Sicherungen 7, 8 sind wiederum in Reihe miteinander verbunden und über das Verbindungselement bzw. Verbindungsseil 9 gekoppelt. Zur mechanischen Verbindung der Außensicherung 8 mit der Innensicherung 7 wird das Verbindungselement bzw. Verbindungsseil 9 erneut durch die Öffnung 11 im Dach des Schrankkorpus 1 hindurchgeführt.

Die beiden Sicherungen 7, 8 sorgen mit Hilfe von Umlenkelementen bzw. Umlenkrollen 12 dafür, dass bei dem Sicherheitsschrank nach den Fig. 4 und 5 ein Verbindungselement 13 in der Normalstellung gemäß Fig. 4 gehalten wird. An dem Verbindungselement 13 greift die Zugfeder 10 an und beaufschlagt das Verbindungselement 13 in der in Fig. 4 durch einen Pfeil angedeuteten Kraftrichtung.

Man erkennt, dass die beiden Drehflügeltüren 2 an das gemeinsame Verbindungselement 13 angeschlossen ist, welches sich seinerseits in einer Führung 14 verschieben lässt. Sofern sich das gemeinsame Verbindungselement 13 für die beiden Drehflügeltüren 2 in der Normalstellung gemäß Fig. 4 befindet, lassen sich die beiden Drehflügeltüren 2 unabhängig voneinander öffnen und schließen, wie dies in der Fig. 4 für die linke Drehflügeltür 2 dargestellt ist und durch einen Pfeil angedeutet wird. Bei diesem Vorgang wird eine die jeweilige Drehflügeltür 2 mit dem Verbindungselement 13 koppelnde Gelenkanordnung 15 verschenkt.

Im Brandfall kommt es nun dazu, dass die Innensicherung 7 oder die Außensicherung 8 oder beide Sicherungen 7, 8 brechen bzw. ausgelöst werden. Als Folge hiervon kann das Verbindungselement 13 gegen die von der Zugfeder 10 aufgebauten Zugkräfte nicht mehr in der Normalstellung der Fig. 4 gehalten werden. Vielmehr sorgt die Zugfeder 10 dafür, dass das gemeinsame Verbindungselement 13 für die beiden Drehflügeltüren 2 seine Schließstellung gemäß Fig. 5 einnimmt. Das hat zur Folge, dass in der Schließstellung des Verbindungselementes 13 gemäß Fig. 5 beide Drehflügeltüren 2 geschlossen werden, sofern sie nicht schon von vornherein ihre Schließstellung einnehmen.

Auf diese Weise wird erneut der Schrankkorpus 1 hermetisch oder nahezu hermetisch verschlossen, so dass ein im Innern entstehender Brandherd nicht nach außen übergreifen kann, vielmehr aufgrund fehlender Sauerstoffzufuhr "erstickt". Umgekehrt kann ein äußerer Brandherd im Schrankinnenraum bevorratete Gefahrstoffe nicht erreichen. Dadurch werden die gleichen Vorteile wie zuvor bereits beschrieben erreicht.

## Patentansprüche

1. Sicherheitsschrank, insbesondere Batterieschrank zur Aufnahme und Bevorratung von Batterien, vorzugsweise von Hochleistungsbatterien wie Lithium-Ionen-Batterien, mit einem Schrankkorpus (1), ferner mit wenigstens einer Drehflügeltür (2), weiter mit zumindest einer Öffnung (3, 4) im Schranckorpus (1) beispielsweise zur Be-/Entlüftung des Schrankinnenraumes, und mit wenigstens einer Sicherung (7, 8), welche ein Verschlusselement (6) wenigstens im Brandfall in seine Schließstellung überführt, **dadurch gekennzeichnet, dass** die Sicherung (7, 8) zumindest zweiteilig mit einer ersten Sicherung (7) und einer zweiten Sicherung (8) ausgebildet ist, wobei die beiden Sicherungen (7, 8) in Reihe miteinander gekoppelt sind und das Verschlusselement (6) wahlweise wenigstens im Brandfall beaufschlagen.

2. Sicherheitsschrank nach Anspruch 1, **dadurch gekennzeichnet, dass** die beiden Sicherungen (7, 8) im Normalbetrieb das Verschlusselement (6) zwangsweise in Offenstellung halten und im Brandfall in die Schließstellung überführen.

3. Sicherheitsschrank nach Anspruch 1 oder 2, **dadurch gekennzeichnet, dass** die beiden Sicherungen (7, 8) als einerseits Innensicherung (7) und andererseits Außensicherung (8) ausgebildet sind.

4. Sicherheitsschrank nach Anspruch 3, **dadurch gekennzeichnet, dass** die Außensicherung (8) an eine Außenoberfläche des Schrankkorpus (1), beispielsweise dachaußenseitig, angeschlossen ist.

5. Sicherheitsschrank nach Anspruch 3 oder 4, **dadurch gekennzeichnet, dass** die Innensicherung (7) an eine Innenoberfläche des Schrankkorpus (1), beispielsweise dachinnenseitig, angeschlossen ist.

6. Sicherheitsschrank nach einem der Ansprüche 1 bis 5, **dadurch gekennzeichnet, dass** die beiden Sicherungen (7, 8) von einer gemeinsamen Zugfeder (10) beaufschlagt werden.

7. Sicherheitsschrank nach einem der Ansprüche 1 bis 6, **dadurch gekennzeichnet, dass** die beiden Sicherungen (7, 8) in gemeinsamer Richtung von der Zugfeder (10) beaufschlagt werden.

8. Sicherheitsschrank nach einem der Ansprüche 1 bis 7, **dadurch gekennzeichnet, dass** die beiden Sicherungen (7, 8) über ein gemeinsamen Verbindungselement (9) miteinander und mit der Zugfeder (10) gekoppelt sind.

9. Sicherheitsschrank nach Anspruch 8, **dadurch gekennzeichnet, dass** es sich bei dem Verbindungselement (9) um ein Verbindungsseil (9) handelt.

10. Sicherheitsschrank nach einem der Ansprüche 1 bis 9, **dadurch gekennzeichnet, dass** die beiden Sicherungen (7, 8) durch eine Öffnung (11) im Schrankkorpus (1) miteinander gekoppelt sind.

11. Sicherheitsschrank nach einem der Ansprüche 1 bis 10, **dadurch gekennzeichnet, dass** die beiden Sicherungen (7, 8) an einen gemeinsamen Bereich des Schrankkorpus (1), beispielsweise eine gemeinsame Dachhälfte des Schrankkorpus (1), angeschlossen sind.

12. Sicherheitsschrank nach einem der Ansprüche 1 bis 11, **dadurch gekennzeichnet, dass** zwei Öffnungen (3, 4) im Schrankkorpus (1), nämlich eine Abluftöffnung (3) und eine Zuluftöffnung (4), vorgesehen sind.

13. Sicherheitsschrank nach Anspruch 12, **dadurch gekennzeichnet, dass** die beiden Öffnungen (3, 4) mit einer gemeinsamen Schutzklappe als Verschlusselement (6) ausgerüstet sind.

14. Sicherheitsschrank nach Anspruch 13, **dadurch gekennzeichnet, dass** die gemeinsame Schutzklappe (6) als linear bewegbarer Ventilschieber (6) ausgebildet ist.

## Claims

1. A safety cabinet, in particular battery cabinet for receiving and storing batteries, preferably high-performance batteries such as lithium ion batteries, comprising a cabinet body (1), further comprising at least one swing door (2), further comprising at least one opening (3, 4) in the cabinet body (1), for example for ventilating the cabinet inner space, and comprising at least one fuse (7, 8), which transfers a closure element (6) into its closed position at least in the event of a fire, **characterized in that** the fuse (7, 8) is formed at least in two parts with a first fuse (7) and a second fuse (8), wherein the two fuses (7, 8) are coupled together in series and optionally act on the closure element (6) at least in the event of a fire.

2. The safety cabinet according to claim 1, **characterized in that** in normal operation, the two fuses (7, 8) forcibly keep the closure element (6) in the open position and transfer it into the closed position in the event of a fire.

3. The safety cabinet according to claim 1 or 2, **characterized in that** the two fuses (7, 8) are formed as internal fuses (7) on the one hand and external fuses (8) on the other hand.

4. The safety cabinet according to claim 3, **characterized in that** the external fuse (8) is connected to an external surface of the cabinet body (1), for example on the outside of the roof.

5. The safety cabinet according to claim 3 or 4, **characterized in that** the internal fuse (7) is connected to an internal surface of the cabinet body (1), for example on the inside of the roof.

6. The safety cabinet according to any one of claims 1 to 5, **characterized in that** the two fuses (7, 8) are acted on by a common tension spring (10).

7. The safety cabinet according to any one of claims 1 to 6, **characterized in that** the two fuses (7, 8) are acted on by the tension spring (10) in a common direction.

8. The safety cabinet according to any one of claims 1 to 7, **characterized in that** the two fuses (7, 8) are coupled to one another and to the tension spring (10) via a common connecting element (9).

9. The safety cabinet according to claim 8, **characterized in that** the connecting element (9) is a connecting cord (9).

10. The safety cabinet according to any one of claims 1 to 9, **characterized in that** the two fuses (7, 8) are coupled to one another through an opening (11) in the cabinet body (1).

11. The safety cabinet according to any one of claims 1 to 10, **characterized in that** the two fuses (7, 8) are connected to a common region of the cabinet body (1), for example a common roof half of the cabinet body (1).

12. The safety cabinet according to any one of claims 1 to 11, **characterized in that** two openings (3, 4) are provided in the cabinet body (1), namely an exhaust air opening (3) and a supply air opening (4).

13. The safety cabinet according to claim 12, **characterized in that** the two openings (3, 4) are equipped with a common protective flap as a closure element (6).

14. The safety cabinet according to claim 13, **characterized in that** the common protective flap (6) is formed as a linearly movable valve slide (6).

## Revendications

1. Armoire de sécurité, notamment armoire de sécurité pour recevoir et stocker des batteries, de préférence des batteries à puissance élevée comme les batteries lithium-ions, avec un corps d'armoire (1), en plus avec au moins une porte battante et pivotante (2), de plus avec au moins une ouverture (3, 4) dans le corps d'armoire (1), par exemple pour aérer/désaérer l'espace intérieur d'armoire et avec au moins une sécurité (7, 8), laquelle transfert un élément de fermeture (6) dans sa position de fermeture (7, 8) au moins en cas d'incendie, **caractérisée en ce que** la sécurité (7, 8) est constituée au moins en deux parties avec une première sécurité (7) et une deuxième sécurité (8), les deux sécurités (7, 8) étant couplées en série l'une avec l'autre et sollicitant au choix l'élément de fermeture (6) au moins en cas d'incendie.

2. Armoire de sécurité selon la revendication 1, **caractérisée en ce que** les deux sécurités (7, 8) maintiennent en fonctionnement normal l'élément de fermeture (6) obligatoirement en position ouverte et le transfèrent en position de fermeture en cas d'incendie.

3. Armoire de sécurité selon la revendication 1 ou 2, **caractérisée en ce que** les deux sécurités (7, 8) sont constituées d'une part en tant que sécurité intérieure (7) et d'autre part en tant que sécurité extérieure (8).

4. Armoire de sécurité selon la revendication 3, **caractérisée en ce que** la sécurité extérieure (8) est raccordée à une surface extérieure du corps d'armoire (1), par exemple sur le côté extérieur du dessus.

5. Armoire de sécurité selon la revendication 3 ou 4, **caractérisée en ce que** la sécurité intérieure (7) est raccordée à une surface intérieure du corps d'armoire (1), par exemple sur le côté intérieur du dessus.

6. Armoire de sécurité selon l'une quelconque des revendications 1 à 5, **caractérisée en ce que** les deux sécurités (7, 8) sont sollicitées par un ressort de traction commun (10).

7. Armoire de sécurité selon l'une quelconque des revendications 1 à 6, **caractérisée en ce que** les deux sécurités (7, 8) sont sollicitées dans une direction commune par le ressort de traction (10).

8. Armoire de sécurité selon l'une quelconque des revendications 1 à 7, **caractérisée en ce que** les deux sécurités (7, 8) sont couplées l'une à l'autre par un élément de liaison commun (9) et avec le ressort de traction (10).

9. Armoire de sécurité selon la revendication 8, **caractérisée en ce que** concernant l'élément de liaison (9), il s'agit un câble de liaison (9).

10. Armoire de sécurité selon l'une quelconque des revendications 1 à 9, **caractérisée en ce que** les deux sécurités (7, 8) sont couplées l'une à l'autre par une ouverture (11) dans le corps d'armoire (1).

11. Armoire de sécurité selon l'une quelconque des revendications 1 à 10, **caractérisée en ce que** les deux sécurités (7, 8) sont raccordées à une zone commune du corps d'armoire (1), par exemple une moitié de dessus commune du corps d'armoire (1).

12. Armoire de sécurité selon l'une quelconque des revendications 1 à 11, **caractérisée en ce que** deux ouvertures (3, 4) sont prévues dans le corps d'armoire (1), notamment une ouverture d'évacuation d'air (3) et une ouverture d'entrée d'air (4).

13. Armoire de sécurité selon la revendication 12, **caractérisée en ce que** les deux ouvertures (3, 4) sont équipées d'un volet de protection commun en tant qu'élément de fermeture (6).

14. Armoire de sécurité selon la revendication 13, **caractérisée en ce que** le volet de protection commun (6) est formé sous la forme d'un tiroir de soupape (6) linéairement mobile.
